# EUROPEAN PATENT SPECIFICATION

(11) **EP 4 649 446 B1**
(45) Date of publication and mention of the grant of the patent: **04.11.2026**
(21) Application number: 24700301.5
(22) Date of filing: 11.01.2024
(51) Int. Cl.: G06T 7/11, G06T 7/62, G06T 7/70

(54) **AUTOMATED SYSTEM AND METHOD FOR ESTIMATING AVERAGE FISH WEIGHT IN AN AQUACULTURE ENVIRONMENT**
AUTOMATISIERTES SYSTEM UND VERFAHREN ZUR SCHÄTZUNG DES MITTLEREN FISCHGEWICHTS IN EINER AQUAKULTURUMGEBUNG
SYSTÈME ET PROCÉDÉ AUTOMATISÉS D'ESTIMATION DU POIDS MOYEN DES POISSONS DANS UN ENVIRONNEMENT D'AQUACULTURE

(30) Priority: 13.01.2023 GR 20230100022; 23.01.2023 US 202318100509
(43) Date of publication of application: 19.11.2025
(73) Proprietor: WINGS ICT Solutions Private Company, 17121 Athens (GR)
(72) Inventor: VLACHEAS, Panagiotis, 17121 Athens (GR); TSAGKARIS, Kostas, 17121 Athens (GR); KOUTSANTONIS, Loizos, 17121 Athens (GR); ANOGIATIS, George, 17121 Athens (GR); DEMESTICHAS, Panagiotis, 17121 Athens (GR)
(74) Representative: Lucke, Andreas
(86) International application number: PCT/EP2024/050595
(87) International publication number: WO 2024/149842

(56) References cited:
- WO-A1-2019/232247
- US-A1- 2019 228 218
- US-A1- 2021 321 593
- COSTA C ET AL: "Extracting fish size using dual underwater cameras", AQUACULTURAL ENGENEERING, ELSEVIER SCIENCE PUBLISHERS LTD, AMSTERDAM NL, vol. 35, no. 3, October 2006 (2006-10-01), pages 218 - 227, XP027941217, ISSN: 0144-8609, [retrieved on 20061001]
- VOSKAKIS DIMITRIS ET AL: "Deep learning based fish length estimation. An application for the Mediterranean aquaculture", OCEANS 2021: SAN DIEGO - PORTO, MTS, 20 September 2021 (2021-09-20), pages 1 - 5, XP034086973, DOI: 10.23919/OCEANS44145.2021.9705813

## Description

### RELATED APPLICATIONS

In accordance with 35 USC 119(a), this application claims priority from Greece Patent Application No. 20230100022 filed with the Hellenic Industrial Property Organization (OBI) in Greece on January 13, 2023.

### 1. FIELD OF THE INVENTION

This invention relates generally to aquaculture management and computer vision software, and, more specifically, to a machine-learning method for ascertaining the average fish weight in an aquaculture environment.

### 2. DESCRIPTION OF THE BACKGROUND ART

Fish average weight estimation constitutes a common problem in the aquaculture industry. In intensive fish farming, the reliable estimation of fish average weight is very important for aquaculture industries. Fish biomass is derived from the total number of fish counted in a specific area multiplied by the average weight of fish sampled, which can be used to predict daily intake demand to avoid underfeeding or overfeeding. Fish biomass data can help aquaculture industries ensure optimum use of the capital invested in facilities and control water quality affected by overfeeding. Quantitative estimation of fish average weight is the basis of scientific aquaculture farm management and conservation strategies for sustainable fish production. Therefore, it is crucial for aquafarmers to be able to estimate average fish weight and consequently biomass accurately.

Traditional measurement methods of average fish weight involve extracting live fish from the ponds. Unfortunately, manual sampling often causes physical damage or great stress to the fish, affecting its welfare and growth. In addition, manual sampling is time consuming and laborious, and it has an inherent inaccuracy of 15 to 25 percent. Furthermore, weight measurement is a time-consuming procedure because of the huge number of fish that must be weighed in order to obtain a reliable average weight computation. Despite this, in many farms, the sampling does not even cover 1% of its population, which makes the sampling unreliable. Manual sampling occurs once per month in the best case and often not even that frequently. Therefore, there is long-felt demand for a non-invasive, rapid, and economically feasible method for fish average weight estimation in an aquaculture environment.

US 2021/321593 A1 discloses an underwater camera system for monitoring fish in a fish pen. A stereoscopic camera may be used to determine dimensions of fish, and the underwater camera system may use the fish dimensions to estimate biomass of fish within the fish pen. The biomass value and rates of change of the biomass value may be used to adjust feeding of the fish in the fish pen. In some embodiments, images captured by the stereoscopic camera are used to focus a variable focal lens camera on a fish to obtain high-resolution images that can be used for diagnosing fish conditions. In some embodiments, images captured by a camera are used to predict motion of the fish, and the predicted motion may be used to generate various fish monitoring analytic values. The fish monitoring analytic values may be used to automatically control operation of the fish pen.

WO 2019/232247 A1 discloses a method and system to predict fish weight and biomass using a non-invasive, digital stereo-camera and computer vision system and method. The stereo camera system is immersed in a net fish pen and captures stereo images of freely moving fish from a substantially lateral perspective. The computer vision system automatically identifies and estimates specific combinations of fin to fin, body depth, and length dimensions, that are learned from the stereo images. The estimates are then used to predict weight with a high degree of accuracy. The system and method are said to be highly accurate and providing greatly reduced stress levels in fish, compared with prior art biomass estimation techniques.

US 2019/228218 A1 discloses methods, systems, and apparatuses, including computer programs encoded on a computer-readable storage medium for estimating the shape, size, and mass of fish. A pair of stereo cameras is utilized to obtain right and left images of fish in a defined area. The right and left images are processed, enhanced, and combined. Object detection is used to detect and track a fish in images. A pose estimator is used to determine key points and features of the detected fish. Based on the key points, a three-dimensional (3-D) model of the fish is generated that provides an estimate of the size and shape of the fish. A regression model or neural network model is applied to the 3-D model to determine a likely weight of the fish.

Further related art is described in COSTA C ET AL, "Extracting fish size using dual underwater cameras", AQUACULTURAL ENGENEERING, ELSEVIER SCIENCE PUBLISHERS LTD, AMSTERDAM NL, vol. 35, no. 3, October 2006, pages 218 to 227 and in VOSKAKIS DIMITRIS ET AL, "Deep learning based fish length estimation. An application for the Mediterranean aquaculture", OCEANS 2021: SAN DIEGO - PORTO, MTS, September 20, 2021, pages 1-5. This

### SUMMARY OF THE DISCLOSURE

The present disclosure relates to an automated method, computer program, and system for estimating the average fish weight in an aquaculture environment. An underwater camera in the aquaculture environment captures video frames from the environment. These frames are preprocessed to improve image quality and normalize brightness. The preprocessed frames are then inputted into a machine-learning vison detection model that has been trained to detect fish. The machine-learning vision detection model identifies a virtual box-region around each detected fish. It then outputs size and location data for each identified virtual-box region, as well pixel data related to the virtual-box region and the frame in which the box-region resides. This size, location, and pixel data is processed and then inputted into an AI-based length estimation model, which computes a fish length for each virtual box-region. The size of the box-region serves as an initial proxy for the fish size. This initial size estimated is refined by the AI-based length estimation model, which uses the input pixel data to account for camera configurations and the distance of the fish from the underwater camera at the time the video frame was captured. The system calculates the average fish weight from the fish length using an analytical model.

In one embodiment, a method for computing an average fish weight in an aquaculture environment comprises the following steps:
receiving video frames from an underwater camera in an aquaculture environment;
preprocessing the video frames to improve image quality and normalize image brightness;
detecting fish within the video frames using a machine-learning vision detection model, wherein the machine-learning vision detection model is a first machine-learning model trained to detect fish in video frames from an aquaculture environment, and wherein the machine vision detection model performs the following method for each detected fish:
   identifying a virtual box-region enclosing the fish;
   computing a coordinate location for the virtual box-region within a video frame;
   computing a length and width of the virtual box-region; and
   outputting the coordinate location of the virtual box region, the length and width of the virtual box region, first pixel data for the virtual box-region, and second pixel data for the whole video frame in which the fish was detected;
computing a length estimate for each detected fish by applying the output of the machine vision detection model to an AI-based length estimation model, wherein the AI-based length estimation model is a second machine-learning model trained to predict a length estimate for a fish based on output of the machine-learning vision model; and
computing an average weight of the fish in the aquaculture environment based on the length estimate computed for each detected fish.

### BRIEF DESCRIPTION OF THE DRAWINGS

Figures **1** is a block diagram that illustrates an example system for automated average fish weight computation.
Figures **2A-B** are flowcharts illustrate a method, according to one embodiment, for computing average fish weight in an aquaculture environment.
Figure **3** is a flowchart that illustrates a method, according to one embodiment, for calculating a length for the fish that accounts for camera configurations and the distance of the fish from the underwater camera.
Figures **4** is a flowchart that illustrates a method for training the Machine Vision Detection Model according to one embodiment.
Figures **5A** and **5B** are flowcharts that illustrate a method for training the AI-based Length Estimation Model according to one embodiment.
Figure **6** is a block diagram that illustrates an example of a virtual box-region visualized around a detected fish.

### DETAILED DESCRIPTION OF THE PREFERRED EMBODIMENTS

The present disclosure relates to an automated method, computer program, and system for estimating the average fish weight in an aquaculture environment. The methods described herein are performed by a computer system ("the system").

### 1. System for Average Fish Weight Computation

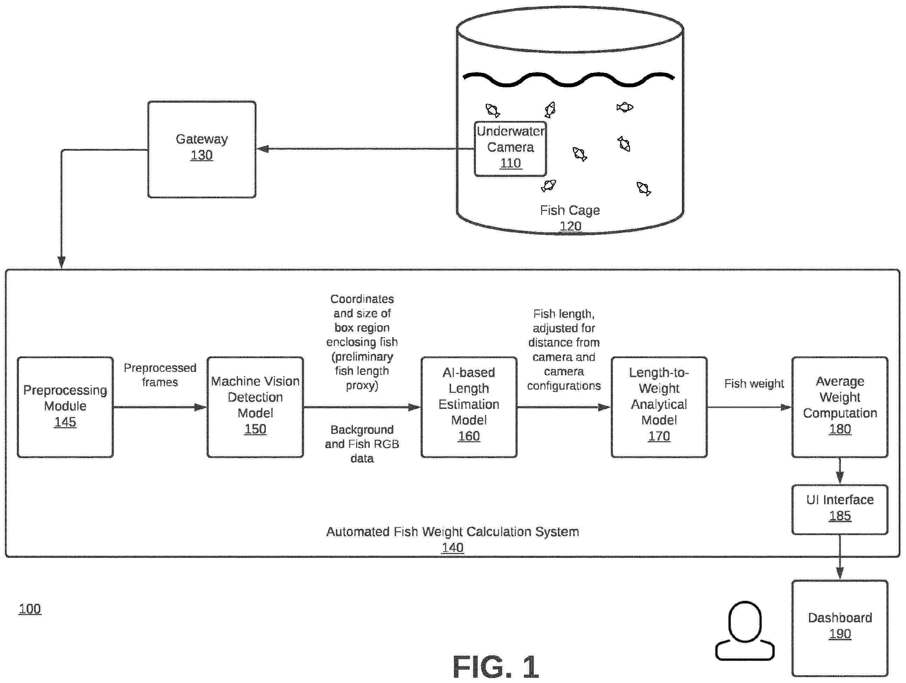

Figure 1 illustrates an example system **100** for automated average fish weight computation. One or more underwater cameras **110** capture video from the aquaculture environment **120.** In one embodiment, each camera **110** is a monocular camera versus a more costly stereovision camera. Video from the underwater cameras is transmitted to an automated fish weight calculation system **140** via gateway **130.**

System **140** includes a Preprocessing Module **145,** a Machine Vision Detection Module **150,** an AI-based Length Estimation Model **160,** a Length-to-Weight Analytical Model **170**, an Average Weight Computation module **180,** and a UI Interface module **185.**

The preprocessing module **145** preprocesses the video frames to improve image quality and normalize brightness. The Machine Vision Fish Detection Model **150** is a machine-learning model that receives the video frames as input, detects fish within the frames, and outputs data for detected fish. The Machine Vision Fish Detection Model is trained to classify fish, localize fish, and define the size of the fish. In one embodiment, the Model uses a YOLO (*e.g*., YOLOv3) real-time object detection algorithm. The algorithm identifies features in the frames that are learned by a deep convolutional neural network (CNN). It represents the size of a detected fish by a virtual box-region enclosing the localized fish. The Model outputs length and width measurements, center coordinates, and RGB pixel data for the virtual box-region enclosing the fish, as well as background RGB pixel data for the frame.

The AI-based Length Estimation Model **160** is a machine-learning model that takes the output of the Machine Vision Detection Model and outputs a length estimate for each of the detected fish in standard industry (SI) units (*e.g*., millimeters). The RGB pixel data in a box-region varies based on camera configurations and the distance of the enclosed fish from the camera at the time a video image of the fish is captured. In training, the AI-based Length Estimation Model learns how fish RGB pixel data and background RGB pixel data affect fish length relative to the size of the box-region surrounding the fish. In one embodiment, the AI-based Length Estimation Model is a neural network model, such as a Multilayer Perceptron model.

The Length-to-Weight Analytical Model **170** uses a length-to-weight mathematical formula to calculate a fish's weight based on its length. The formula, which is species specific, is based on known bibliography data linking the length of a fish to its weight.

The Average Weight Computation module **180** receives the fish weights for the detected fish and computes an average weight for the fish in the Fish Cage **120,** after removing outlier weights.

The UI interface module **185** generates a dashboard page with the average fish weight data, which is displayed on a computing device **190** of an aquaculture environment manager.

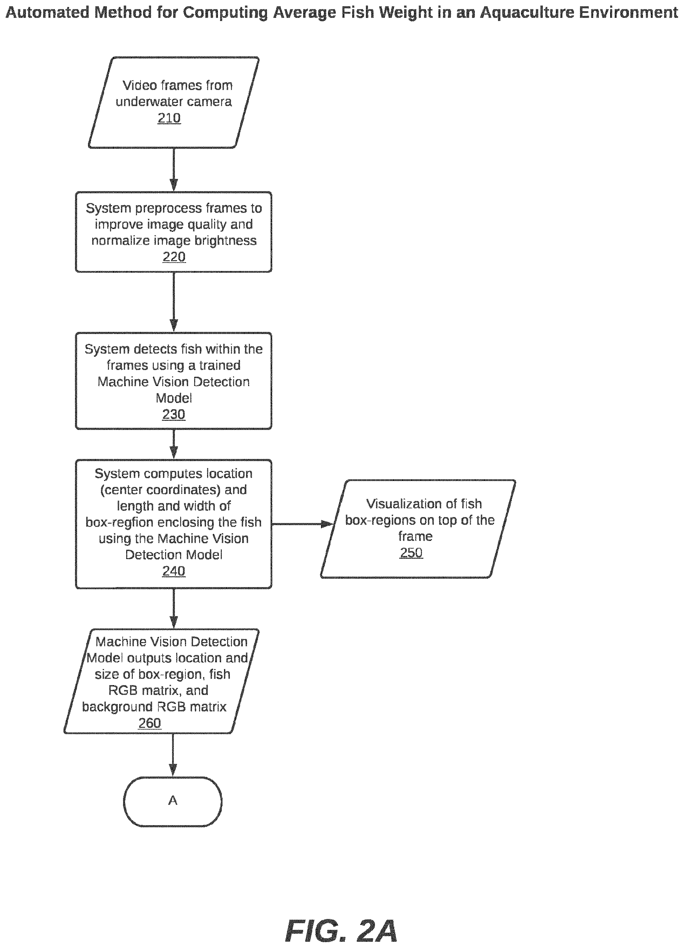

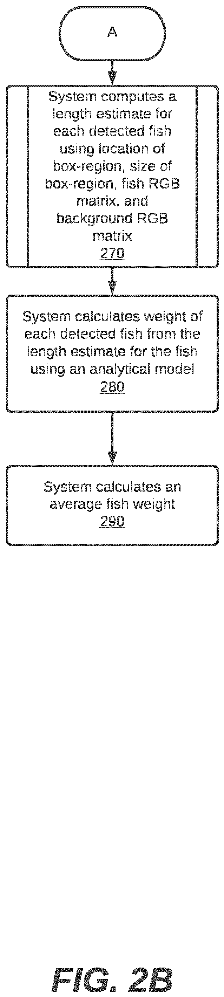

The method in which system **140** calculates an average fish weight is described in more detail with respect to Figures **2A-2B****.**

### 2. Automated Method for Computing Average Fish Weight in an Aquaculture Environment

Figures **2A-B** illustrate a method for computing average fish weight in an aquaculture environment. This is an automated method performed by the system. The system receives video frames from an underwater camera in the aquaculture environment (step **210).** In one embodiment, these are videos of a specific duration captured at a specific time of day, wherein the duration and time of day is the same as those of the videos used to train the Machine Vision Detection Model.

The system preprocesses the frames to remove image quality and normalize image brightness (step **220).** The frames are preprocessed to address difficulties associated with turbidity and low levels of luminosity. Turbidity is a measure of the degree to which water loses its transparency due to the presence of suspended particles. As turbidity increases, it becomes more difficult to detect fish in the aquaculture environment. Likewise, if the luminosity level is low, it can be difficult to separate the fish from the sea environment. In one embodiment, the following preprocessing techniques are employed to improve the system ability to detect fish by getting more clear frames and increasing the contracts between the fish and the aquaculture environment:
□ Gamma Correction: Enhances frame's contrast to make the fish more distinct
□ Median Filter: Reduces "salt and pepper" noise
□ Frame Histogram Equalization: Allows for areas of lower contrast to gain a higher contrast
□ Reshape Function: Used to make the frame compatible to the detection algorithm and to reduce the computational cost, since the evaluation is applied in a frame with lower resolution.

The system detects fish within the frames using the Machine Vision Detection Model (step **230).** In one embodiment, a fish is considered to be "detected" if it meets certain criteria, such as being in the focus center of the camera traveling in an angular direction within an acceptable range. In one embodiment, the Machine Vision Detection Model detects all the fish in the frame and then uses statistical filters to select the fish that meets this criteria.

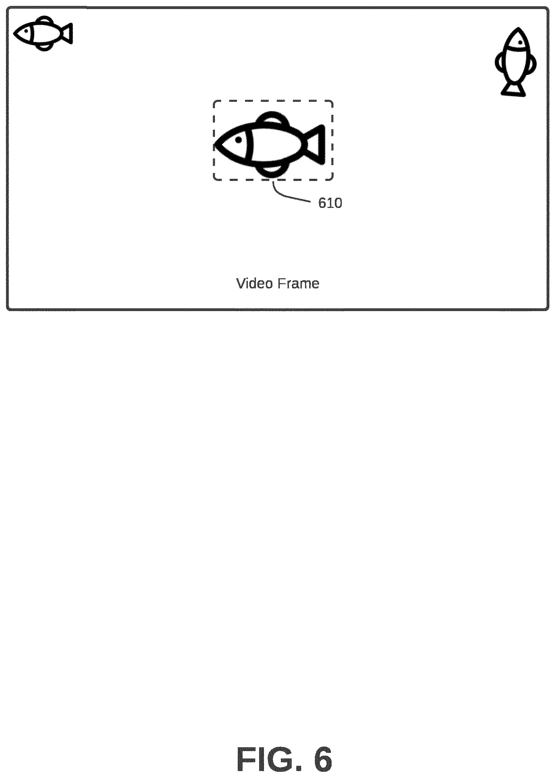

As a result of the detection process, the system identifies virtual box-regions around the detected fish within the frames. The virtual box-regions are boxes visualized by the Model around fish it detects in the frame. An example of a visualized virtual box-region is illustrated in Figure **6** (see box-region **610).** For each detected fish, the Machine Vision Detection Model computes the location of the center coordinates of a virtual box-region enclosing the fish (step **240).** The Model also computes the length and width of the virtual box-region enclosing the fish (also step **240**). This length and width may be computed in number of pixels. The result is a visualized virtual box region around the detected fish (step **250).**

For each virtual box-region identified by the Machine Vision Detection Model, the Model outputs center coordinates of the box region, the length and width of the box region, a "fish RGB matrix", and a "background RGB matrix" (step **260).** The outputted length and width of the box-region is an initial estimate of the length and width of the fish. However, this may not be an accurate length calculation because the size of the virtual box-region will depend on the camera configurations and the distance of the fish from the camera. For example, assume fish A is larger than Fish B. If Fish A is further away from the camera than Fish B when the frame in which they appear is captured, then Fish A's virtual box-region may be smaller than Fish B's virtual box-region, despite Fish A being larger than Fish B. Therefore, the initial estimated length is refined to a more accurate length calculation using the AI-based Length Estimation Model, as described with respect to step **270**.

In one embodiment, the "fish RGB matrix" is a grid of NxN super pixels within the box-region enclosing the fish. N is a positive integer. The NxN size is equal to the length and width of the box-region. The RGB (Red-Green-Blue) values of each super pixels are calculated by averaging the RGB values of the frame pixels composing the super pixel. The result is a NxNx3 matrix with the RGB values of fish super pixels.

In one embodiment, a "background RGB matrix" is a grid of NxN super pixels defined within the entire frame in which the applicable box-region resides. The RGB values of each super pixel are calculated by averaging the RGB values of the frame pixels composing the super pixel. The result is a NxNx3 matrix with the RGB value of background super pixels. The background RGB matrix is calculated for each frame for which at least one fish is detected.

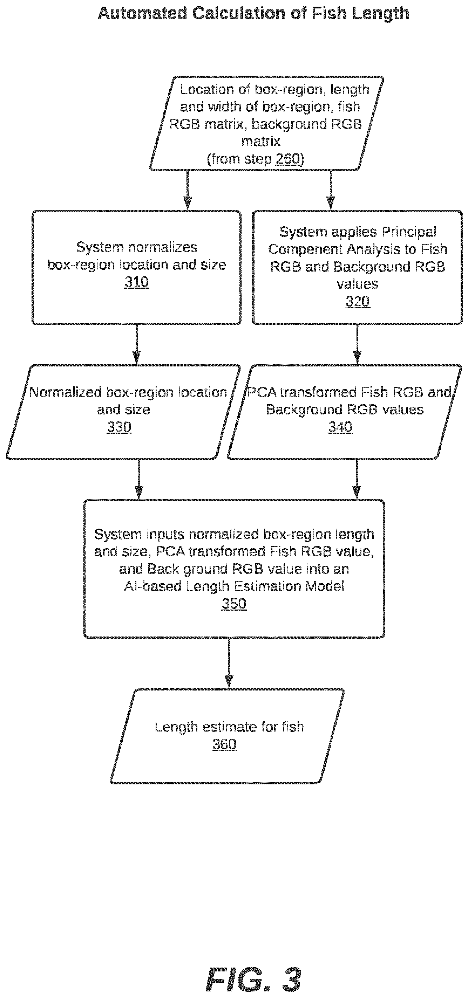

The system uses the AI-based Length Estimation Model to compute a length estimate for each fish detected using the location of the box-region around the fish (i.e., the center coordinates), the length and width of the box region, the fish RGB matrix, and the background RGB matrix (step **270**). The output of the AI-based Length Estimate Model is an estimate of the actual length of the fish in Standard Industry (SI) measurement units, such as millimeters. The AI-based Length Estimation Model uses the fish RGB matrix and the background RGB matrix to account for camera configurations and a detected fish's distance from the camera at the time the video frame with the fish was captured. Step **270** is described in more detail with respect to Figure **3****.**

The system calculates the weight of each fish from the estimated length of the fish using an analytical model that links length to weight (step **280).** The model uses a length-to-weight mathematical formula based on known bibliography data linking the length of a fish to its weight. The formula is species specific.

The system calculates an average fish weight from the individual weights of the detected fish (step 290). In one embodiment, the system removes outlier fish weights in calculating an average fish weight. The outliers may be computed using the Interquartile (IQR) formula. The IQR is defined as the distance between the first quartile (Q1) and the third quartile (Q3):$IQR = Q 3 - Q 1$

Given a set of values, Q1 is defined as the value below which twenty-five percent of the distribution lies. Q3 is defined as the value below which seventy-five percent of the distribution lies.

The outliers are values below a lower boundary or above an upper boundary:
Upper Boundary: Q3 + 1.5*IQR
Lower Boundary: Q1-1.5*IQR

After the outlier weights are removed, the system averages the remaining weights to obtain the average fish weight.

### 3. Calculating Fish Length

Figure **3** illustrates step **270** in more detail. Specially, it illustrates a method for calculating a length estimate for a fish. The inputs to the method are the location (*e.g*., center coordinates), length, and width of a virtual box-region enclosing a fish, the corresponding fish RGB matrix, and the corresponding background RGB matrix. The system normalizes the box-region location and size (step **310).** The system also applies Principal Component Analysis to Fish RGB and Background RGB values (step **320).** The normalized box-region location and size, as well as the PCA-transformed Fish RGB and Background RGB values are inputs **(330, 340)** to the AI-based Length Estimation Model. The AI-based Length Estimation model computes and outputs a length estimate for the enclosed fish (steps **350, 360).** The AI-based Length Estimation Model uses the fish RGB matrix and the background RGB matrix to account for camera configurations and a detected fish's distance from the camera, which results in a more accurate length calculation for the fish than just the length of the virtual box-region enclosing the fish.

### 4. Training of Machine Vision Detection Model

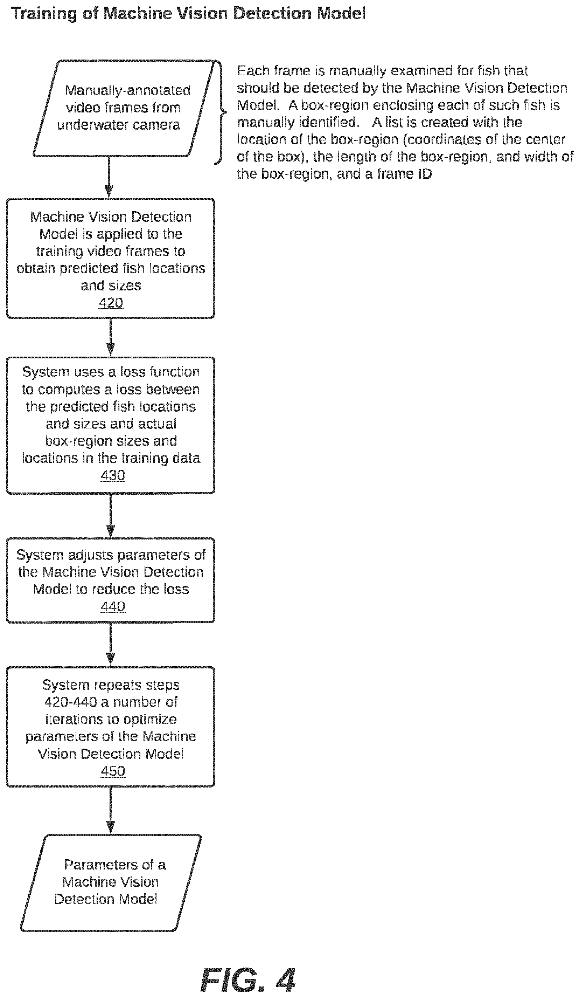

Figure **4** illustrates a method for training the Machine Vision Detection Model. The model is trained using a manually-annotated training set of video frames from an underwater camera. The videos in the training set are of a specific duration and at a specific time of day. In one embodiment, the video is captured from different aquaculture sites. Each frame is assigned a unique time stamp.

The training set is manually annotated as follows: Each frame in the training set is manually examined to identify fish that should be detected by the Machine Vision Detection Model. For each identified fish, a box-region enclosing the fish is manually identified. A list is created with data for each manually-identified box region. Specifically, for each manually-identified box region, the list includes the center coordinates of the box-region, the length and width of the box-region, and a frame ID of the video frame in which the box-region resides.

The Machine Vision Detection Model is applied to the training video frames to detect fish within the training video frames (step **420).** Specifically, it visualizes virtual box-regions around areas in the video frames that it predicts are fish. The system uses a loss function (e.g., mean-squared error (MSE), binary cross-entropy (BCE), etc.) to computes a loss between the size and location of box-regions for the predicted fish and the size and locations of the manually-identified box-regions in the training data (step **430).** The system adjusts parameters of the Machine Vision Detection Model to reduce the loss (step **440).** The system repeats steps **420-440** a number of iterations to optimize parameters of the Machine Vision Detection Model (step **450).** The number of iterations may be a fixed number or the number it takes until convergence is reached. The optimized parameters are used in the Machine Vision Detection Model used to detect fish in step **230.** In one embodiment, the Model is a Convolutional Neural Network

### 5. Training of AI-Based Length Estimation Model

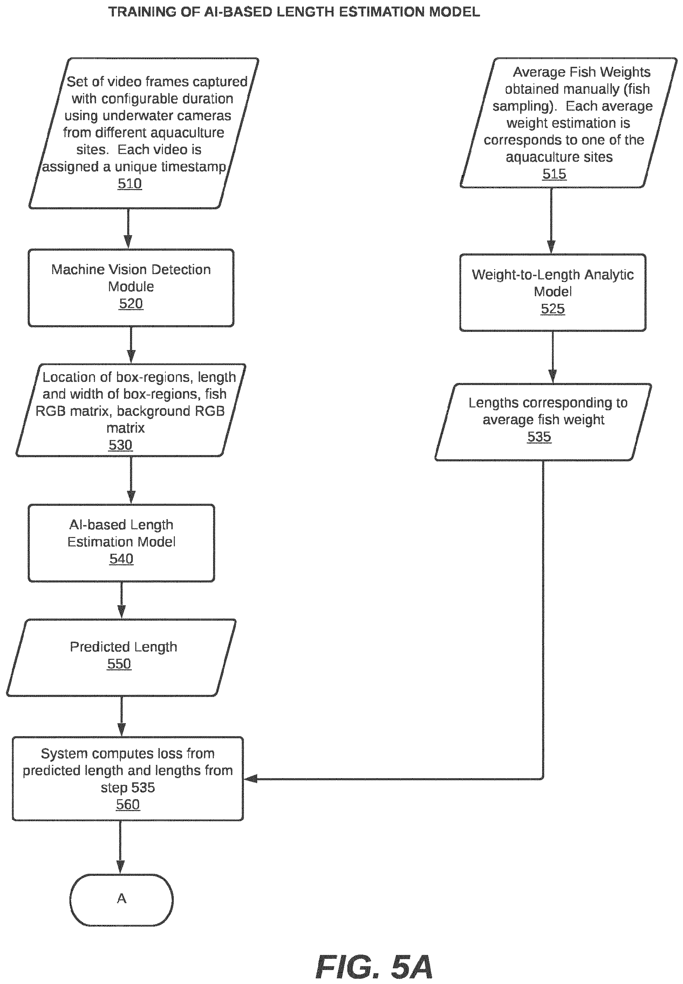

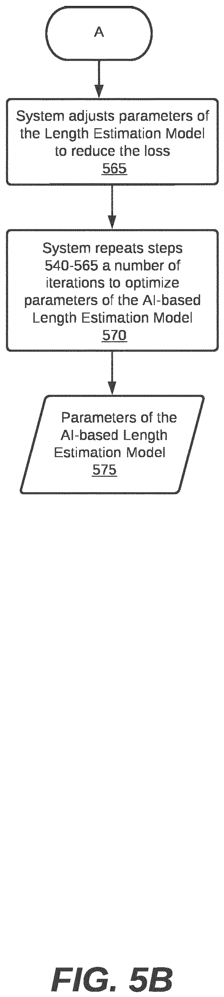

Figures **5A** and **5B** illustrate a method for training the AI-based Length Estimation Model according to one embodiment. The system receives a set of video frames captured with configurable duration using underwater cameras from different aquaculture sites (step **510).** Each video is assigned a unique time stamp. The training set for training the AI-based Length Estimation Model may be the same as that used to train the Machine Vision Detection Model. For each aquaculture sited from which the training video frames were obtained, the system also receives an average fish weight estimate for the site obtained from manual sampling of the site. The manual-obtained average weights are converted to lengths using a Weight-to-Length Analytic Model (steps **525-535).** This Weight-to-Length Analytic Model uses the reverse mathematical formula as the Length-to-Weight Analytic Model.

The training videos frames (from **510)** are inputted into the trained Machine Vision Detection Model. The Machine Vision Detection Model detects fish in the frames, and, for each detected fish, outputs the location (center coordinates) of the box-region around the fish, length and width of the box regions, the fish RGB matrix, and the background RGB matrix (steps **520-530).** The AI-based Length Estimation Model then takes the output of the Machine Vision Detection Model and predicts a length estimate for the detected fish in the video frames (steps **540-550).** During the training process, the predicted length estimate for a fish from a particular aquaculture site is then compared to the length computed from the manually-derived average fish weight for that same aquaculture site. The system computes a loss from the predicted lengths and the lengths derived from the manually-derived average fish weight (step **560).** The system adjusts the parameters of the AI-Based Length Estimation Model to minimize or reduce the loss (step **565).** Steps **540-565** are repeated for a number of iterations (*e.g*., a fixed number of iterations or until convergence is reached).

### 6.0 Calculating the Total Fish Biomass in the Aquaculture Environment

The total fish biomass in the aquaculture environment is calculated by multiplying the average fish weight by the number of fish in the aquaculture environment. In one embodiment, the number of fish in the aquaculture environment is ascertained by subtracting the number of countable dead fish from the number of fish initially stocked.

### 7.0 Advantages

The system and methods disclosed herein enable a fish farmer to calculate the average fish weight at any time and with accuracy by means of an automated and real-time monitoring solution. The system does not require costly stereovision cameras to account for fish distance from the camera in determining fish size. Instead, one or more low-cost monocular cameras can be installed in fixed locations, and distance issues are addressed by the AI-based Length Estimation Model.

The ability to automatically and easily obtain the average fish weight allows for enhanced aquaculture operations. For example, the farmer can better monitor the breeding and grow-out stages of a farmed species. The farmer can better feed the fish in an optimized and timely way to ensure healthy and fast growth of the fish. Furthermore, the farmer can ensure optimum use of the capital invested in facilities. The fish feed is estimated to be the most expensive part of an aquaculture farm operation, often ranging from 60-80% of the overall expenses. Optimizing the feeding amounts through automated and real-time calculation of average fish weight will help significantly reduce the costs of the required feeding amounts.

The farmer also can ensure better water quality by avoiding overfeeding. This will improve the environmental status of the farm due to less feed loss and waste, which will lead to improved sustainability of the aquaculture industry.

### 8.0 General

The methods described with respect to Figures **1-6** are embodied in software and performed by a computer system (comprising one or more computing devices) executing the software. A person skilled in the art would understand that a computer system has one or more physical memory units, disks, or other physical, computer-readable storage media for storing software instructions, as well as one or more processors for executing the software instructions. A person skilled in the art would also understand that a computer system may be a stand-alone computer or a network of computers working together, such as in a client-server architecture.

## Claims

1. A method, performed by a computer system, for computing an average fish weight in an aquaculture environment (120), the method comprising:
receiving video frames from an underwater camera (110) in an aquaculture environment (120);
preprocessing the video frames to improve image quality and normalize image brightness;
detecting fish within the video frames using a machine-learning vision detection model, wherein the machine-learning vision detection model is a first machine-learning model trained to detect fish in video frames from an aquaculture environment (120),
**characterized in that** the machine vision detection model performs the following method for each detected fish:
identifying a virtual box-region enclosing the fish;
computing a coordinate location for the virtual box-region within a video frame;
computing a length and width of the virtual box-region; and
outputting the coordinate location of the virtual box region, the length and width of the virtual box region, and first pixel data for the virtual box-region and second pixel data for the whole video frame in which the fish was detected;
computing a length estimate for each detected fish by applying the output of the machine vision detection model to an AI-based length estimation model, wherein the AI-based length estimation model is a second machine-learning model trained to predict a length estimate for a fish based on output of the machine-learning vision model;
computing a weight for each detected fish based on the length estimate for the fish; and
computing an average fish weight in the aquaculture environment (120) based on the weights computed for the detected fish.

2. The method of claim 1, wherein the first pixel data is a grid of NXN super pixels defined within the virtual box-region enclosing the fish, and wherein the second pixel data is a grid of NxN super pixels defined within the whole video frame in which the fish was detected.

3. The method of claim 2, wherein computing a length estimate for each detected fish further comprises:
normalizing coordinate and length and width data for the virtual box-region enclosing the fish;
applying Principal Component Analysis to the first and second pixel data;
using the normalized coordinate data, normalized length and width data, and the PCA-transformed first and second pixel data as input to the AI-based length estimation model, preferably wherein the AI-based length estimation model uses the PCA-transformed first and second pixel data to account for camera configurations and the distance of the detected fish from the underwater camera (110) in computing a length estimate for the detected fish.

4. The method of claim 1, wherein the underwater camera (110) is a monocular camera.

5. The method of claim 1, wherein the weight for each detected fish is computed using a length-to-weight mathematical formula based on known bibliography data linking the length of a fish to its weight, or wherein computing an average fish weight comprises identifying outlier fish weights and filtering out the outlier fish weights from the fish weights used to compute the average fish weight.

6. A system (100, 140) for computing an average fish weight in an aquaculture environment (120), the system (100, 140) comprising:
one or more processors;
one or more memory units coupled to the one or more processors, wherein the one or more memory units store instructions that, when executed by the one or more processors, cause the system (100, 140) to perform the operations of:
receiving video frames from an underwater camera (110) in an aquaculture environment (120);
preprocessing the video frames to improve image quality and normalize image brightness;
detecting fish within the video frames using a machine-learning vision detection model,
wherein the machine-learning vision detection model is a first machine-learning model trained to detect fish in video frames from an aquaculture environment (120),
**characterized in that** the machine vision detection model performs the following method for each detected fish:
identifying a virtual box-region enclosing the fish;
computing a coordinate location for the virtual box-region within a video frame;
computing a length and width of the virtual box-region; and
outputting the coordinate location of the virtual box region, the length and width of the virtual box region, and first pixel data for the virtual box-region and second pixel data for the whole video frame in which the fish was detected;
computing a length estimate for each detected fish by applying the output of the machine vision detection model to an AI-based length estimation model, wherein the AI-based length estimation model is a second machine-learning model trained to predict a length estimate for a fish based on output of the machine-learning vision model;
computing a weight for each detected fish based on the length estimate for the fish; and
computing an average fish weight in the aquaculture environment (120) based on the weights computed for the detected fish.

7. The system (100, 140) of claim 6, wherein the first pixel data is a grid of NXN super pixels defined within the virtual box-region enclosing the fish, and wherein the second pixel data is a grid of NxN super pixels defined within the whole video frame in which the fish was detected.

8. The system (100, 140) of claim 7, wherein computing a length estimate for each detected fish further comprises:
normalizing coordinate and length and width data for the virtual box-region enclosing the fish;
applying Principal Component Analysis to the first and second pixel data;
using the normalized coordinate data, normalized length and width data, and the PCA-transformed first and second pixel data as input to the AI-based length estimation model, preferably wherein the AI-based length estimation model uses the PCA-transformed first and second pixel data to account for camera configurations and the distance of the detected fish from the underwater camera (110) in computing a length estimate for the detected fish.

9. The system (100, 140) of claim 6, wherein the underwater camera (110) is a monocular camera.

10. The system (100, 140) of claim 6, wherein the weight for each detected fish is computed using a length-to-weight mathematical formula based on known bibliography data linking the length of a fish to its weight, or wherein computing an average fish weight comprises identifying outlier fish weights and filtering out the outlier fish weights from the fish weights used to compute the average fish weight.

11. A non-transitory computer-readable medium comprising a computer program, that, when executed by a computer system, enables the computer system to perform the following method for computing an average fish weight in an aquaculture environment (120), the method comprising:
receiving video frames from an underwater camera (110) in an aquaculture environment (120);
preprocessing the video frames to improve image quality and normalize image brightness;
detecting fish within the video frames using a machine-learning vision detection model,
wherein the machine-learning vision detection model is a first machine-learning model trained to detect fish in video frames from an aquaculture environment (120),
**characterized in that** the machine vision detection model performs the following method for each detected fish:
identifying a virtual box-region enclosing the fish;
computing a coordinate location for the virtual box-region within a video frame;
computing a length and width of the virtual box-region; and
outputting the coordinate location of the virtual box region, the length and width of the virtual box region, and first pixel data for the virtual box-region and second pixel data for the whole video frame in which the fish was detected;
computing a length estimate for each detected fish by applying the output of the machine vision detection model to an AI-based length estimation model, wherein the AI-based length estimation model is a second machine-learning model trained to predict a length estimate for a fish based on output of the machine-learning vision model;
computing a weight for each detected fish based on the length estimate for the fish; and
computing an average fish weight in the aquaculture environment (120) based on the weights computed for the detected fish.

12. The non-transitory computer-readable medium of claim 11, wherein the first pixel data is a grid of NXN super pixels defined within the virtual box-region enclosing the fish, and wherein the second pixel data is a grid of NxN super pixels defined within the whole video frame in which the fish was detected.

13. The non-transitory computer-readable medium of claim 12, wherein computing a length estimate for each detected fish further comprises:
normalizing coordinate and length and width data for the virtual box-region enclosing the fish;
applying Principal Component Analysis to the first and second pixel data;
using the normalized coordinate data, normalized length and width data, and the PCA-transformed first and second pixel data as input to the AI-based length estimation model, preferably wherein the AI-based length estimation model uses the PCA-transformed first and second pixel data to account for camera configurations and the distance of the detected fish from the underwater camera (110) in computing a length estimate for the detected fish.

14. The non-transitory computer-readable medium of claim 11, wherein the underwater camera (110) is a monocular camera.

15. The non-transitory computer-readable medium of claim 11, wherein the weight for each detected fish is computed using a length-to-weight mathematical formula based on known bibliography data linking the length of a fish to its weight, or wherein computing an average fish weight comprises identifying outlier fish weights and filtering out the outlier fish weights from the fish weights used to compute the average fish weight.

## Patentansprüche

1. Verfahren, das von einem Computersystem durchgeführt wird, zum Berechnen eines durchschnittlichen Fischgewichts in einer Aquakulturumgebung (120), wobei das Verfahren Folgendes umfasst:
Empfangen von Videobildern von einer Unterwasserkamera (110) in einer Aquakulturumgebung (120);
Vorverarbeiten der Videobilder, um die Bildqualität zu verbessern und die Bildhelligkeit zu normalisieren;
Erkennen von Fischen innerhalb der Videobilder unter Verwendung eines Maschinelles-Lernen-Sichterkennungsmodells, wobei das Maschinelles-Lernen-Sichterkennungsmodell ein erstes Maschinelles-Lernen-Modell ist, das trainiert ist, um Fische in Videobildern aus einer Aquakulturumgebung (120) zu erkennen, **dadurch gekennzeichnet, dass** das Maschinelles-Lernen-Sichterkennungsmodell das folgende Verfahren für jeden erkannten Fisch durchführt:
Identifizieren eines virtuellen Boxbereichs, der den Fisch umschließt;
Berechnen einer Koordinatenposition für den virtuellen Boxbereich innerhalb eines Videobildes;
Berechnen einer Länge und Breite des virtuellen Boxbereichs; und
Ausgeben der Koordinatenposition des virtuellen Boxbereichs, der Länge und Breite des virtuellen Boxbereichs und erster Pixeldaten für den virtuellen Boxbereich und zweiter Pixeldaten für das gesamte Videobild, in dem der Fisch erkannt wurde;
Berechnen einer Längenschätzung für jeden erkannten Fisch durch Anwenden der Ausgabe des Maschinelles-Lernen-Sichterkennungsmodells auf ein KI-basiertes Längenschätzungsmodell, wobei das KI-basierte Längenschätzungsmodell ein zweites Maschinelles-Lernen-Modell ist, das trainiert ist, um eine Längenschätzung für einen Fisch basierend auf der Ausgabe des Maschinelles-Lernen-Sichtmodells vorherzusagen;
Berechnen eines Gewichts für jeden erkannten Fisch basierend auf der Längenschätzung für den Fisch; und
Berechnen eines durchschnittlichen Fischgewichts in der Aquakulturumgebung (120) basierend auf den für die erkannten Fische berechneten Gewichten.

2. Verfahren nach Anspruch 1, wobei die ersten Pixeldaten ein Raster von NxN Superpixeln sind, die innerhalb des virtuellen Boxbereichs definiert sind, der den Fisch umschließt, und wobei die zweiten Pixeldaten ein Raster von NxN Superpixeln sind, die innerhalb des gesamten Videobildes definiert sind, in dem der Fisch erkannt wurde.

3. Verfahren nach Anspruch 2, wobei das Berechnen einer Längenschätzung für jeden erkannten Fisch ferner Folgendes umfasst:
Normalisieren von Koordinaten- und Längen- und Breitendaten für den virtuellen Boxbereich, der den Fisch umschließt;
Anwenden einer Hauptkomponentenanalyse (PCA) auf die ersten und zweiten Pixeldaten;
Verwenden der normalisierten Koordinatendaten, der normalisierten Längen- und Breitendaten und der PCA-transformierten ersten und zweiten Pixeldaten als Eingabe in das KI-basierte Längenschätzungsmodell, wobei das KI-basierte Längenschätzungsmodell vorzugsweise die PCA-transformierten ersten und zweiten Pixeldaten verwendet, um Kamerakonfigurationen und den Abstand des erkannten Fisches von der Unterwasserkamera (110) beim Berechnen einer Längenschätzung für den erkannten Fisch zu berücksichtigen.

4. Verfahren nach Anspruch 1, wobei die Unterwasserkamera (110) eine monokulare Kamera ist.

5. Verfahren nach Anspruch 1, wobei das Gewicht für jeden erkannten Fisch unter Verwendung einer mathematischen Länge-zu-Gewicht-Formel basierend auf bekannten bibliographischen Daten berechnet wird, die die Länge eines Fisches mit seinem Gewicht verknüpfen, oder wobei das Berechnen eines durchschnittlichen Fischgewichts das Identifizieren von Ausreißerfischgewichten und das Herausfiltern der Ausreißerfischgewichte aus den Fischgewichten, die zum Berechnen des durchschnittlichen Fischgewichts verwendet werden, umfasst.

6. System (100, 140) zum Berechnen eines durchschnittlichen Fischgewichts in einer Aquakulturumgebung (120), wobei das System (100, 140) Folgendes umfasst:
einen oder mehrere Prozessoren;
eine oder mehrere Speichereinheiten, die mit dem einen oder den mehreren Prozessoren gekoppelt sind, wobei die eine oder die mehreren Speichereinheiten Anweisungen speichern, die, wenn sie von dem einen oder den mehreren Prozessoren ausgeführt werden, das System (100, 140) veranlassen, die folgenden Operationen durchzuführen:
Empfangen von Videobildern von einer Unterwasserkamera (110) in einer Aquakulturumgebung (120);
Vorverarbeiten der Videobilder, um die Bildqualität zu verbessern und die Bildhelligkeit zu normalisieren;
Erkennen von Fischen innerhalb der Videobilder unter Verwendung eines Maschinelles-Lernen-Sichterkennungsmodells, wobei das Maschinelles-Lernen-Sichterkennungsmodell ein erstes Maschinelles-Lernen-Modell ist, das trainiert ist, um Fische in Videobildern aus einer Aquakulturumgebung (120) zu erkennen, **dadurch gekennzeichnet, dass** das Maschinelles-Lernen-Sichterkennungsmodell das folgende Verfahren für jeden erkannten Fisch durchführt:
Identifizieren eines virtuellen Boxbereichs, der den Fisch umschließt;
Berechnen einer Koordinatenposition für den virtuellen Boxbereich innerhalb eines Videobildes;
Berechnen einer Länge und Breite des virtuellen Boxbereichs; und
Ausgeben der Koordinatenposition des virtuellen Boxbereichs, der Länge und Breite des virtuellen Boxbereichs und erster Pixeldaten für den virtuellen Boxbereich und zweiter Pixeldaten für das gesamte Videobild, in dem der Fisch erkannt wurde;
Berechnen einer Längenschätzung für jeden erkannten Fisch durch Anwenden der Ausgabe des Maschinelles-Lernen-Sichterkennungsmodells auf ein KI-basiertes Längenschätzungsmodell, wobei das KI-basierte Längenschätzungsmodell ein zweites Maschinelles-Lernen-Modell ist, das trainiert ist, um eine Längenschätzung für einen Fisch basierend auf der Ausgabe des Maschinelles-Lernen-Sichtmodells vorherzusagen;
Berechnen eines Gewichts für jeden erkannten Fisch basierend auf der Längenschätzung für den Fisch; und
Berechnen eines durchschnittlichen Fischgewichts in der Aquakulturumgebung (120) basierend auf den für die erkannten Fische berechneten Gewichten.

7. System (100, 140) nach Anspruch 6, wobei die ersten Pixeldaten ein Raster von NxN Superpixeln sind, die innerhalb des virtuellen Boxbereichs definiert sind, der den Fisch umschließt, und wobei die zweiten Pixeldaten ein Raster von NxN Superpixeln sind, die innerhalb des gesamten Videobildes definiert sind, in dem der Fisch erkannt wurde.

8. System (100, 140) nach Anspruch 7, wobei das Berechnen einer Längenschätzung für jeden erkannten Fisch ferner Folgendes umfasst:
Normalisieren von Koordinaten- und Längen- und Breitendaten für den virtuellen Boxbereich, der den Fisch umschließt;
Anwenden einer Hauptkomponentenanalyse (PCA) auf die ersten und zweiten Pixeldaten;
Verwenden der normalisierten Koordinatendaten, der normalisierten Längen- und Breitendaten und der PCA-transformierten ersten und zweiten Pixeldaten als Eingabe in das KI-basierte Längenschätzungsmodell, wobei das KI-basierte Längenschätzungsmodell vorzugsweise die PCA-transformierten ersten und zweiten Pixeldaten verwendet, um Kamerakonfigurationen und den Abstand des erkannten Fisches von der Unterwasserkamera (110) beim Berechnen einer Längenschätzung für den erkannten Fisch zu berücksichtigen.

9. System (100, 140) nach Anspruch 6, wobei die Unterwasserkamera (110) eine monokulare Kamera ist.

10. System (100, 140) nach Anspruch 6, wobei das Gewicht für jeden erkannten Fisch unter Verwendung einer mathematischen Länge-zu-Gewicht-Formel basierend auf bekannten bibliographischen Daten berechnet wird, die die Länge eines Fisches mit seinem Gewicht verknüpfen, oder wobei das Berechnen eines durchschnittlichen Fischgewichts das Identifizieren von Ausreißerfischgewichten und das Herausfiltern der Ausreißerfischgewichte aus den Fischgewichten, die zum Berechnen des durchschnittlichen Fischgewichts verwendet werden, umfasst.

11. Nichtflüchtiges computerlesbares Medium, das ein Computerprogramm umfasst, das, wenn es von einem Computersystem ausgeführt wird, dem Computersystem ermöglicht, das folgende Verfahren zum Berechnen eines durchschnittlichen Fischgewichts in einer Aquakulturumgebung (120) durchzuführen, wobei das Verfahren Folgendes umfasst:
Empfangen von Videobildern von einer Unterwasserkamera (110) in einer Aquakulturumgebung (120);
Vorverarbeiten der Videobilder, um die Bildqualität zu verbessern und die Bildhelligkeit zu normalisieren;
Erkennen von Fischen innerhalb der Videobilder unter Verwendung eines Maschinelles-Lernen-Sichterkennungsmodells, wobei das Maschinelles-Lernen-Sichterkennungsmodell ein erstes Maschinelles-Lernen-Modell ist, das trainiert ist, um Fische in Videobildern aus einer Aquakulturumgebung (120) zu erkennen, **dadurch gekennzeichnet, dass** das Maschinelles-Lernen-Sichterkennungsmodell das folgende Verfahren für jeden erkannten Fisch durchführt:
Identifizieren eines virtuellen Boxbereichs, der den Fisch umschließt;
Berechnen einer Koordinatenposition für den virtuellen Boxbereich innerhalb eines Videobildes;
Berechnen einer Länge und Breite des virtuellen Boxbereichs; und
Ausgeben der Koordinatenposition des virtuellen Boxbereichs, der Länge und Breite des virtuellen Boxbereichs und erster Pixeldaten für den virtuellen Boxbereich und zweiter Pixeldaten für das gesamte Videobild, in dem der Fisch erkannt wurde;
Berechnen einer Längenschätzung für jeden erkannten Fisch durch Anwenden der Ausgabe des Maschinelles-Lernen-Sichterkennungsmodells auf ein KI-basiertes Längenschätzungsmodell, wobei das KI-basierte Längenschätzungsmodell ein zweites Maschinelles-Lernen-Modell ist, das trainiert ist, um eine Längenschätzung für einen Fisch basierend auf der Ausgabe des Maschinelles-Lernen-Sichtmodells vorherzusagen;
Berechnen eines Gewichts für jeden erkannten Fisch basierend auf der Längenschätzung für den Fisch; und
Berechnen eines durchschnittlichen Fischgewichts in der Aquakulturumgebung (120) basierend auf den für die erkannten Fische berechneten Gewichten.

12. Nichtflüchtiges computerlesbares Medium nach Anspruch 11, wobei die ersten Pixeldaten ein Raster von NxN Superpixeln sind, die innerhalb des virtuellen Boxbereichs definiert sind, der den Fisch umschließt, und wobei die zweiten Pixeldaten ein Raster von NxN Superpixeln sind, die innerhalb des gesamten Videobildes definiert sind, in dem der Fisch erkannt wurde.

13. Nichtflüchtiges computerlesbares Medium nach Anspruch 12, wobei das Berechnen einer Längenschätzung für jeden erkannten Fisch ferner Folgendes umfasst:
Normalisieren von Koordinaten- und Längen- und Breitendaten für den virtuellen Boxbereich, der den Fisch umschließt;
Anwenden einer Hauptkomponentenanalyse (PCA) auf die ersten und zweiten Pixeldaten;
Verwenden der normalisierten Koordinatendaten, der normalisierten Längen- und Breitendaten und der PCA-transformierten ersten und zweiten Pixeldaten als Eingabe in das KI-basierte Längenschätzungsmodell, wobei das KI-basierte Längenschätzungsmodell vorzugsweise die PCA-transformierten ersten und zweiten Pixeldaten verwendet, um Kamerakonfigurationen und den Abstand des erkannten Fisches von der Unterwasserkamera (110) beim Berechnen einer Längenschätzung für den erkannten Fisch zu berücksichtigen.

14. Nichtflüchtiges computerlesbares Medium nach Anspruch 11, wobei die Unterwasserkamera (110) eine monokulare Kamera ist.

15. Nichtflüchtiges computerlesbares Medium nach Anspruch 11, wobei das Gewicht für jeden erkannten Fisch unter Verwendung einer mathematischen Länge-zu-Gewicht-Formel basierend auf bekannten bibliographischen Daten berechnet wird, die die Länge eines Fisches mit seinem Gewicht verknüpfen, oder wobei das Berechnen eines durchschnittlichen Fischgewichts das Identifizieren von Ausreißerfischgewichten und das Herausfiltern der Ausreißerfischgewichte aus den Fischgewichten, die zum Berechnen des durchschnittlichen Fischgewichts verwendet werden, umfasst.

## Revendications

1. Procédé, mis en œuvre par un système informatique, pour calculer un poids moyen de poisson dans un environnement aquacole (120), le procédé comprenant :
la réception d'images vidéo provenant d'une caméra sous-marine (110) dans un environnement aquacole (120) ;
le prétraitement des images vidéo afin d'améliorer la qualité d'image et de normaliser la luminosité d'image ;
la détection de poisson dans les images vidéo à l'aide d'un modèle de détection visuelle par apprentissage automatique, dans lequel modèle de détection visuelle par apprentissage automatique est un premier modèle d'apprentissage automatique entraîné à détecter des poissons dans des images vidéo provenant d'un environnement aquacole (120), **caractérisé en ce que** le modèle de détection visuelle par apprentissage automatique réalise le procédé suivant pour chaque poisson détecté :
l'identification d'une région virtuelle de délimitation englobant le poisson ;
le calcul d'une position de coordonnées pour la région virtuelle de délimitation dans une image vidéo ;
le calcul d'une longueur et d'une largeur de la région virtuelle de délimitation ; et
la sortie de la position de coordonnées de la région virtuelle de délimitation, de la longueur et de la largeur de la région virtuelle de délimitation, ainsi que de premières données de pixels pour la région virtuelle de délimitation et de secondes données de pixels pour l'image vidéo entière dans laquelle le poisson a été détecté ; le calcul d'une estimation de longueur pour chaque poisson détecté en appliquant la sortie du modèle de détection visuelle par apprentissage automatique à un modèle d'estimation de longueur basé sur l'IA, dans lequel modèle d'estimation de longueur basé sur l'IA est un second modèle d'apprentissage automatique entraîné à prédire une estimation de longueur pour un poisson sur la base de la sortie du modèle de détection visuelle par apprentissage automatique ;
le calcul d'un poids pour chaque poisson détecté sur la base de l'estimation de longueur du poisson ; et
le calcul d'un poids moyen de poisson dans l'environnement aquacole (120) sur la base des poids calculés pour les poissons détectés.

2. Procédé selon la revendication 1, dans lequel les premières données de pixels sont une grille de super-pixels NXN définie dans la région virtuelle de délimitation englobant le poisson, et dans lequel les secondes données de pixels sont une grille de super-pixels NxN définie dans l'image vidéo entière dans laquelle le poisson a été détecté.

3. Procédé selon la revendication 2, dans lequel le calcul d'une estimation de longueur pour chaque poisson détecté comprend en outre :
la normalisation des données de position de coordonnées, de longueur et de largeur pour la région virtuelle de délimitation englobant le poisson ;
l'application d'une analyse en composantes principales aux premières et secondes données de pixels ;
l'utilisation des données de position de coordonnées normalisées, des données de longueur et de largeur normalisées, et des premières et secondes données de pixels transformées par ACP comme entrée du modèle d'estimation de longueur basé sur l'IA, de préférence dans lequel le modèle d'estimation de longueur basé sur l'IA utilise les premières et secondes données de pixels transformées par ACP pour tenir compte des configurations de caméra et de la distance du poisson détecté par rapport à la caméra sous-marine (110) lors du calcul d'une estimation de longueur pour le poisson détecté.

4. Procédé selon la revendication 1, dans lequel la caméra sous-marine (110) est une caméra monoculaire.

5. Procédé selon la revendication 1, dans lequel le poids pour chaque poisson détecté est calculé à l'aide d'une formule mathématique longueur-poids basée sur des données bibliographiques connues reliant la longueur d'un poisson à son poids, ou dans lequel le calcul d'un poids moyen de poisson comprend l'identification de poids de poisson aberrant et le filtrage des poids de poisson aberrant parmi les poids de poisson utilisés pour calculer le poids moyen de poisson.

6. Système (100, 140) pour calculer un poids moyen de poisson dans un environnement aquacole (120), le système (100, 140) comprenant :
un ou plusieurs processeurs ;
une ou plusieurs unités de mémoire couplées au(x) processeur(s), dans lequel la ou les unités de mémoire stockent des instructions qui, lorsqu'elles sont exécutées par le ou les processeurs, amènent le système (100, 140) à effectuer les opérations suivantes :
la réception d'images vidéo provenant d'une caméra sous-marine (110) dans un environnement aquacole (120) ;
le prétraitement des images vidéo afin d'améliorer la qualité d'image et de normaliser la luminosité d'image ;
la détection de poisson dans les images vidéo à l'aide d'un modèle de détection visuelle par apprentissage automatique, lequel modèle de détection visuelle par apprentissage automatique est un premier modèle d'apprentissage automatique entraîné à détecter des poissons dans des images vidéo provenant d'un environnement aquacole (120), **caractérisé en ce que** le modèle de détection visuelle par apprentissage automatique réalise le procédé suivant pour chaque poisson détecté :
l'identification d'une région virtuelle de délimitation englobant le poisson ;
le calcul d'une position de coordonnées pour la région virtuelle de délimitation dans une image vidéo ;
le calcul d'une longueur et d'une largeur de la région virtuelle de délimitation ; et
la sortie de la position de coordonnées de la région virtuelle de délimitation, de la longueur et de la largeur de la région virtuelle de délimitation, ainsi que de premières données de pixels pour la région virtuelle de délimitation et de secondes données de pixels pour l'image vidéo entière dans laquelle le poisson a été détecté ;
le calcul d'une estimation de longueur pour chaque poisson détecté en appliquant la sortie du modèle de détection visuelle par apprentissage automatique à un modèle d'estimation de longueur basé sur l'IA, lequel modèle d'estimation de longueur basé sur l'IA est un second modèle d'apprentissage automatique entraîné à prédire une estimation de longueur pour un poisson sur la base de la sortie du modèle de détection visuelle par apprentissage automatique ;
le calcul d'un poids pour chaque poisson détecté sur la base de l'estimation de longueur du poisson ; et le calcul d'un poids moyen de poisson dans l'environnement aquacole (120) sur la base des poids calculés pour les poissons détectés.

7. Système (100, 140) selon la revendication 6, dans lequel les premières données de pixels sont une grille de super-pixels NXN définie dans la région virtuelle de délimitation englobant le poisson, et dans lequel les secondes données de pixels sont une grille de super-pixels NxN définie dans l'image vidéo entière dans laquelle le poisson a été détecté.

8. Système (100, 140) selon la revendication 7, dans lequel le calcul d'une estimation de longueur pour chaque poisson détecté comprend en outre :
la normalisation des données de position de coordonnées, de longueur et de largeur pour la région virtuelle de délimitation englobant le poisson ;
l'application d'une analyse en composantes principales aux premières et secondes données de pixels ;
l'utilisation des données de position de coordonnées normalisées, des données de longueur et de largeur normalisées, et des premières et secondes données de pixels transformées par ACP comme entrée du modèle d'estimation de longueur basé sur l'IA, de préférence dans lequel le modèle d'estimation de longueur basé sur l'IA utilise les premières et secondes données de pixels transformées par ACP pour tenir compte des configurations de caméra et de la distance du poisson détecté par rapport à la caméra sous-marine (110) lors du calcul d'une estimation de longueur pour le poisson détecté.

9. Système (100, 140) selon la revendication 6, dans lequel la caméra sous-marine (110) est une caméra monoculaire.

10. Système (100, 140) selon la revendication 6, dans lequel le poids pour chaque poisson détecté est calculé à l'aide d'une formule mathématique longueur-poids basée sur des données bibliographiques connues reliant la longueur d'un poisson à son poids, ou dans lequel le calcul d'un poids moyen de poisson comprend l'identification de poids de poisson aberrant et le filtrage des poids de poisson aberrant parmi les poids de poisson utilisés pour calculer le poids moyen de poisson.

11. Support lisible par ordinateur non transitoire comprenant un programme informatique qui, lorsqu'il est exécuté par un système informatique, permet au système informatique d'exécuter le procédé suivant pour calculer un poids moyen de poisson dans un environnement aquacole (120), le procédé comprenant :
la réception d'images vidéo provenant d'une caméra sous-marine (110) dans un environnement aquacole (120) ;
le prétraitement des images vidéo afin d'améliorer la qualité d'image et de normaliser la luminosité d'image ;
la détection de poisson dans les images vidéo à l'aide d'un modèle de détection visuelle par apprentissage automatique, dans lequel modèle de détection visuelle par apprentissage automatique est un premier modèle d'apprentissage automatique entraîné à détecter des poissons dans des images vidéo provenant d'un environnement aquacole (120), **caractérisé en ce que** le modèle de détection visuelle par apprentissage automatique réalise le procédé suivant pour chaque poisson détecté :
l'identification d'une région virtuelle de délimitation englobant le poisson ;
le calcul d'une position de coordonnées pour la région virtuelle de délimitation dans une image vidéo ;
le calcul d'une longueur et d'une largeur de la région virtuelle de délimitation ; et
la sortie de la position de coordonnées de la région virtuelle de délimitation, de la longueur et de la largeur de la région virtuelle de délimitation, ainsi que de premières données de pixels pour la région virtuelle de délimitation et de secondes données de pixels pour l'image vidéo entière dans laquelle le poisson a été détecté ;
le calcul d'une estimation de longueur pour chaque poisson détecté en appliquant la sortie du modèle de détection visuelle par apprentissage automatique à un modèle d'estimation de longueur basé sur l'IA, lequel modèle d'estimation de longueur basé sur l'IA est un second modèle d'apprentissage automatique entraîné à prédire une estimation de longueur pour un poisson sur la base de la sortie du modèle de détection visuelle par apprentissage automatique ;
le calcul d'un poids pour chaque poisson détecté sur la base de l'estimation de longueur du poisson ; et
le calcul d'un poids moyen de poisson dans l'environnement aquacole (120) sur la base des poids calculés pour les poissons détectés.

12. Support lisible par ordinateur non transitoire selon la revendication 11, dans lequel les premières données de pixels sont une grille de super-pixels NXN définie dans la région virtuelle de délimitation englobant le poisson, et dans lequel les secondes données de pixels sont une grille de super-pixels NxN définie dans l'image vidéo entière dans laquelle le poisson a été détecté.

13. Support lisible par ordinateur non transitoire selon la revendication 12, dans lequel le calcul d'une estimation de longueur pour chaque poisson détecté comprend en outre :
la normalisation des données de position de coordonnées, de longueur et de largeur pour la région virtuelle de délimitation englobant le poisson ;
l'application d'une analyse en composantes principales aux premières et secondes données de pixels ;
l'utilisation des données de position de coordonnées normalisées, des données de longueur et de largeur normalisées, et des premières et secondes données de pixels transformées par ACP comme entrée du modèle d'estimation de longueur basé sur l'IA, de préférence dans lequel le modèle d'estimation de longueur basé sur l'IA utilise les premières et secondes données de pixels transformées par ACP pour tenir compte des configurations de caméra et de la distance du poisson détecté par rapport à la caméra sous-marine (110) lors du calcul d'une estimation de longueur pour le poisson détecté.

14. Support lisible par ordinateur non transitoire selon la revendication 11, dans lequel la caméra sous-marine (110) est une caméra monoculaire.

15. Support lisible par ordinateur non transitoire selon la revendication 11, dans lequel le poids pour chaque poisson détecté est calculé à l'aide d'une formule mathématique longueur-poids basée sur des données bibliographiques connues reliant la longueur d'un poisson à son poids, ou dans lequel le calcul d'un poids moyen de poisson comprend l'identification de poids de poisson aberrant et le filtrage des poids de poisson aberrant parmi les poids de poisson utilisés pour calculer le poids moyen de poisson.
